(19) Europäisches Patentamt
European Patent Office
Office européen des brevets

(11) Publication number: 0 166 797 A1

(12) **EUROPEAN PATENT APPLICATION**

(21) Application number: 84107683.9

(22) Date of filing: 03.07.84

(51) Int. Cl.[4]: C 04 B 24/00

(43) Date of publication of application: 08.01.86 Bulletin 86/2

(84) Designated Contracting States: DE FR GB NL

(71) Applicant: THE DOW CHEMICAL COMPANY
2030 Dow Center Abbott Road P.O. Box 1967
Midland, MI 48640(US)

(72) Inventor: Crump, Druce K.
142 Oyster Creek Drive 48
Lake Jackson Texas, 77566(US)

(72) Inventor: Wilson, David A.
229 San Saba
Richwood Texas, 77531(US)

(74) Representative: Casalonga, Axel et al,
BUREAU D.A. CASALONGA OFFICE JOSSE & PETIT
Baaderstrasse 12-14
D-8000 München 5(DE)

(54) **Cement compositions containing set retarders.**

(57) The process of employing as a cement setting retarder a compound which is a derivative of dicyclopentadiene bis-(methylamine) wherein at least one amine hydrogen is substituted with a methylenephosphonic acid group or a salt thereof, the other groups being selected from a limit set of moieties.

EP 0 166 797 A1

Croydon Printing Company Ltd

 0166797

# CEMENT COMPOSITIONS CONTAINING SET RETARDERS BASED ON DICYCLOPENTADIENE DERIVATIVES

The invention pertains to aqueous hydraulic cement slurry compositions containing particular set retarders which are compounds derived from the bis(methylamine) of dicyclopentadiene.

Hydrophobic-substituted phosphonic or phosphinic acids and their alkali metal salts have been used in cements, primarily soil/cement mixtures, to improve the freeze-thaw properties and salt-resistance. Six- to eighteen-carbon alkyl phosphonic acids or their alkali metal salts are so described in U.S. Patent 3,794,506. A plugging mixture for high temperature oil and gas wells comprising Portland cement and 1-hydroxy ethylidene-phosphonic acid trisodium or tripotassium salts as set time extenders is described in Derwent abstract 71376B/39 (1979) of USSR Patent 640,019. The use of these phosphonate salts at temperatures of 75°C to 150°C in amounts of 0.1-0.3 percent by weight is described in the abstract.

Other organic phosphorous acid derivatives are taught to be useful additives in cement compositions as turbulence-inducing and flow-property improver

additives (U.S. 3,964,921 and 4,040,854, respectively). Another turbulence-inducer is a pyrolysis product of urea and a bis(alkylenepyrophosphate) (U.S. 3,409,080).

Alkylene diphosphonic acids and their water soluble salts are described as set time extenders and water reducing agents for gypsum plasters (U.S. 4,225,361). Lignins which have been phosphonoalkylated through an ether linkage or corresponding sulfonates, sulfides, hydroxyl or amine derivatives are taught to be useful primarily as dispersants or surfactants (U.S. 3,865,803) and are also said to be useful as "cement additives" without indicating specific uses.

Ultra-rapid hardening Portland cement compositions are described which contain various acid salt additives (U.S. 4,066,469). It states that use of acid phosphates as the acid salt additives is excluded since the phosphates have a characteristically powerful retarding property peculiar to them.

Most of the cement used in oil wells is called portland cement. Portland cement is manufactured by calcining raw materials consisting of limestone, clay, shale, and slag together at 2,600°F to 2,800°F in a rotary kiln.

The resulting material, is cooled and interground with small percentages of gypsum to form portland cement. In addition to the above raw materials, other components such as sand, bauxite, iron oxide, etc., may be added to adjust the chemical composition depending upon the type of portland cement desired.

The principal components of the finished portland cement are lime, silica, alumina, and iron. These components form the following complex compounds: Tricalcium aluminate, ($3CaO\cdot Al_2O_3$), tetracalcium aluminoferrite, ($4CaO\cdot Al_2O_3\cdot Fe_2O_3$), tricalcium silicate, ($3CaO\cdot SiO_2$), and dicalcium silicate, ($2CaO\cdot SiO_2$).

When water is added to cement, setting and hardening reactions begin immediately. The chemical compounds in the cement undergo the processes of hydration and recrystallization which results in a set product. The maximum amount of water that can be used with an oil-well cement is the amount which can be added before solids separation occurs. The minimum amount of water is the amount required to make the slurry pumpable. Therefore, the normal water ratio is governed by the maximum and minimum limits for a particular class of cement.

Thickening time is the time that the cement remains pumpable in the well. This is the most critical property of an oil-well cement. The thickening time has to be long enough to be pumped into place and short enough to permit operations to resume quickly. Generally, 3 hours provides the necessary placement time plus a safety factor.

Other factors, such as fluid loss, viscosity and density must be taken into consideration and additives are known to the art-skilled which affect each of these factors as well as that of set, or thickening, time as mentioned above. Another parameter which has an effect on set time is temperature. Cement sets more rapidly as the temperature increases. This must be taken into

consideration particularly when pumping cement into deeper wells since temperature increases as the depth of the well becomes greater. Temperature also affects the strength of the cement, the strength becoming less as the temperature increases.

Because of this temperature effect, it is important to retard the setting of the cement employed in the deeper wells.

It has now been discovered that certain new phosphonomethylated compounds are useful in aqueous cement slurries as set retarding additives. Some of these compounds are chelating agents, while others are useful as threshold agents in retarding the precipitation of metal ions from aqueous solution. However, not all such compounds are useful as cement set-retarders.

The products useful as cement set retarders in the present invention have the following formula:

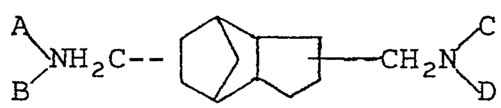

wherein A, B, C and D substituents are each independently selected from hydrogen; $-CH_2PO_3H_2$ (methylene phosphonic); $-(CH_2)_nOH$ wherein n is 1 to 4; $CH_2CHOHSO_3H$ (hydroxyethylsulphonic); $CH_2CHOHCH_2SO_3H$ (hydroxypropylsulphonic; $-(CH_2)_nCOOH$ wherein n is 1 to 3; and the alkali metal, alkaline earth metal, ammonia, and amine salts of the aforementioned phosphonic, sulfonic or carboxylic acids, providing that at least one of the above substituents is a methylenephosphonic acid group or a salt thereof.

It has been determined that not all dicyclopentadiene bis(methylamine) (DCPD-BMA) derivatives are useful for the same purposes. Thus, only a limited few which contain at least one methylenephosphonic acid group will be effective as set retarders for cement. Even those which contain the methylenephosphonic acid group will be ineffective if certain other groups are present. Thus, for example the DCPD-BMA derivative which contains one methylenesulfonic acid group and three methylenephosphonic acid group does not retard the setting of cement under conditions of the test.

While the compounds so used must contain at least one methylenephosphonate group as a substituent of the amine nitrogen, certain other groups may be present. Thus, the remaining amine hydrogens may be unsubstituted. Substituents other than the methylenephosphonic group include alkanol radicals, wherein the alkyl group contains 1 to 4 carbon atoms; alkylcarboxylic acid radicals, wherein the alkyl group contains 2 to 4 carbons; hydroxyethyl- and hydroxypropylsulfonic acid radicals; and the alkali metal, alkaline earth metal, ammonia or amine salts of any of the above phosphonic, sulfonic or carboxylic acid groups.

It should be recognized that when mixed derivatives are obtained, it is not usually possible to direct or predict which amine hydrogens are substituted. The product, in all probability, contains a mixture of isomeric compounds.

When formaldehyde and phosphorus acid are reacted with DCPD bis(methylamine), hereinafter DCPD-BMA,

the result is a new compound having the following structure:

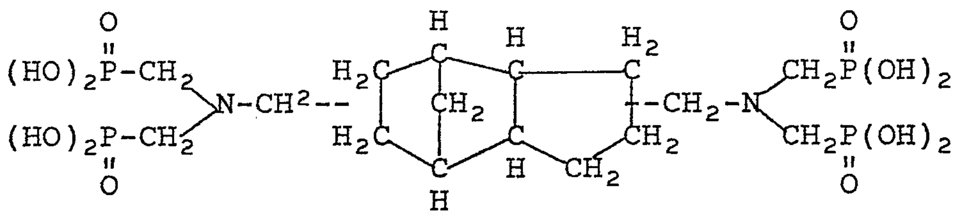

The above compound has been found to have excellent cement retarding properties.

Other substituents for the hydrogens of the amine groups of the above DCPD derivatives form useful chelating agents, but only the compounds having at least one methylenephosphonic acid group or an alkali metal, alkaline earth metal, ammonia, or amine salt derivative are effective as cement set retarding agents.

Substituents other than methylenephosphonates give compounds having the following structure:

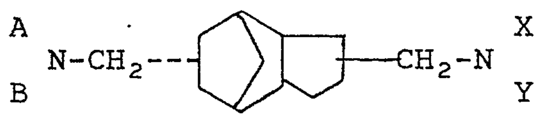

wherein A, B, X, and Y can be hydrogen; $C_2$ to $C_6$ hydroxyalkyl; hydroxyethyl- and hydroxypropylsulfonic, methylene-, ethylene- and propylenesulfonic; $C_2$ to $C_4$ alkylcarboxylic acid radicals; and the alkali metal alkaline earth metal, ammonia, or amine salts of any of the foregoing acid derivatives; with the

proviso that at least one of the groups must be a methylenephosphonic acid group or salt.

The following examples illustrate the preparation of the compounds useful in the invention.

EXAMPLE 1

Deionized water (100 g) and 49.0 g (0.25 mole) of DCPD-BMA weighed into a 500 ml round-bottom reaction flask equipped with a water-cooled reflux condenser, mechanical stirrer, thermometer with a temperature controller, and an addition funnel. Approximately 120 g of concentrated HCl solution and 98.7 g (1.20 mole) of phosphorous acid were added to the aqueous amine solution and the reaction mixture heated to reflux and maintained for one hour. Aqueous 37 percent formaldehyde solution (85.1 g, 1.05 mole) was added to the addition funnel and added over a two hour period. The reaction mixture was heated at reflux for an additional two hours and then cooled. The product obtained was the DCPD-BMA derivative in which each amine nitrogen is replaced by a methylenephosphonic acid

```
          H O
          | ‖
group    -C-P(OH)2.
          |
          H
```

EXAMPLE 2

The procedure of Example 1 was followed except 0.60 mole of phosphorous acid and 0.53 mole of aqueous formaldehyde solution were used. The product obtained was the DCPD-BMA derivative in which there are two methylenephosphonic acid group substituents with two hydrogens remaining unsubstituted.

EXAMPLE 3

Deionized water (40 g) and 24.5 g (0.125 mole) of DCPD-BMA were weighed into a 500 ml round--bottom flask equipped with a water-cooled reflux condenser, mechanical stirrer, thermometer with a temperature controller, and an addition funnel. Caustic solution (10.1 g of 50 percent) and 25.0 g (0.127 mole) the sodium salt of 3-chloro-2-hydroxy-1--propanesulfonic acid, were added with stirring and the reaction mixture heated at 85°C for one hour. Additional caustic solution (12.0 g of 50 percent) and 25.0 g of the sodium salt of 3-chloro-2-hydroxy--1-propanesulfonic acid, were then added and the solution heated at 85°C for 1-1/2 hours. Approximately 60 g of concentrated HCl solution and 24.7 g (0.300 mole) of phosphorous acid were added and the reaction mixture heated to reflux and maintained for one hour. Aqueous 37 percent formaldehyde solution (21.3 g, 0.263 mole) was added to the addition funnel and added over about a one-hour period. The reaction mixture was heated at reflux for an additional three hours and then cooled. The product obtained was the DCPD-BMA derivative containing two methylenephosphonic acid and two 2-hydroxypropylsulfonic acid groups $-H_2C-CHOH-CH_2-SO_3H$.

EXAMPLE 4

The procedure of Example 3 was followed except 0.127 mole of the sodium salt of 3-chloro-2-hydroxy-1-propanesulfonic acid, 37.0 g (0.450 mole) of phosphorous acid, and 32.0 g (0.394 mole) of 37 percent formaldehyde solution were used. The product obtained was the DCPD-BMA derivative containing three methylenephosphonic acid groups and one 2-hydroxypropylsulfonic acid group.

EXAMPLE 5

Ethylene oxide (11.6 g, 0.263 mole) was reacted with 24.5 g (0.125 mole) of DCPD-BMA and the reaction product then phosphonomethylated according to the procedure of Example 1 using 0.300 mole of phosphorous acid and 0.263 mole of formaldehyde solution. The product obtained was the DCPD-BMA derivative containing two hydroxyethyl and two methylenephosphonic acid groups.

EXAMPLE 6

The procedure of Example 5 was followed except the amine was reacted with 0.132 mole of ethylene oxide and the reaction product phosphonomethylated using 0.450 mole of phosphorous acid and 0.394 mole of formaldehyde solution. The product obtained was the DCPD-BMA derivative containing one hydroxyethyl group and three methylenephosphonic acid groups.

EXAMPLE 7

Propylene oxide (7.6 g, 0.130 mole) was reacted with 24.5 g (0.125 mole) of DCPD-BMA and the reaction product then phosphonomethylated according to the procedure of Example 1 using 0.450 mole of phosphorous acid and 0.394 mole of formaldehyde solution. The product obtained was the same as that of Example 6 except for a hydroxypropyl group in place of the hydroxyethyl group.

In a similar manner, several more compounds useful in the invention (Examples 9-11) as well as several similar compounds which are outside the scope of the invention (Examples 12-15) were prepared. Their structures are listed in Table I.

The following test was used in determining whether a given compound was useful as a set retarding agent:

1. The following ingredients were weighed:
   cement - 100 g
   water - 38 g
   additive - 0.2 g active
2. Water and liquid additive were mixed;
3. Cement was added to liquid, the bottle tightly closed and shaken to mix;
4. Bottle was placed in a pre-heated 180°F (82°C) bath;
5. Setting of cement was checked after 6 and 24 hours.

A blank (no additive) was run for comparison with each of the additives.

The following table shows the test results of those compounds indicated.

TABLE I

| Example No. | **A | B | C | D | Unset at 6 hrs. | Unset at 24 hrs. |
|---|---|---|---|---|---|---|
| | Substituents(1) | | | | | |
| 1 | MP | MP | MP | MP | Yes | Yes |
| 2 | MP | MP | H | H | Yes | Yes |
| 3 | MP | MP | HPS | HPS | Yes | Yes |
| 4 | MP | MP | MP | HPS | Yes | Yes |
| 5 | MP | MP | HE | HE | Yes | Yes |
| 6 | MP | MP | MP | HE | Yes | Yes |
| 7 | MP | MP | MP | HP | Yes | Yes |
| 8 | MP | MP | MP | H | Yes | Yes |
| 9 | MP | MP | HP | HP | Yes | Yes |
| 10 | MP | MP | SA | SA | Yes | Yes |
| 11 | MP | MP | MP | SP | Yes | Yes |
| 12* | MP | MP | MP | MS | Set | -- |
| 13* | SA | SA | SA | SA | Set | -- |
| 14* | SHPS | SHPS | SHPS | SHPS | Set | -- |
| 15* | MP | MP | MS | MS | Set | -- |
| 16* | NO ADDITIVE | | | | Set | -- |

(1) HE = hydroxyethyl; HP = hydroxypropyl; MP = methylenephosphonic acid; HPS = hydroxypropylsulfonic acid; SA = sodium acetate; SP = sodium propionate; MS = methylenesulfonic acid; SHPS = sodium hydroxypropylsulfonate. It should be understood that any one or more of the isomers of the compound indicated can be present, i.e. A, B, C and D substituents are interchangeable.

* Not an example of the invention.

0166797

1. In a process for retarding the setting of an aqueous cement slurry which comprises adding to said slurry a retarding agent,

CHARACTERIZED IN THAT the retarding agent is a compound of the formula

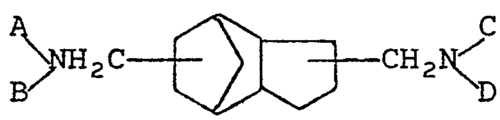

wherein A, B, C and D substituents are independently selected from hydrogen; $-CH_2PO_3H_2$; $-(CH_2)_nOH$ wherein n is 1 to 4; $CH_2CHOHSO_3H$; $CH_2CHOHCH_2SO_3H$; $-(CH_2)_nCOOH$ wherein n is 1 to 3; and the alkali metal, alkaline earth metal, ammonia, and amine salts of the aforementioned acids; providing that at least one of the above substituents is $-CH_2PO_3H_2$ or a salt thereof.

2. The process of Claim 1 wherein the compound employed is the tetramethylenephosphonic acid derivative of dicyclopentadiene bis(methylamine) or a salt thereof.

3. The process of Claim 1 wherein the compound employed contains three methylenephosphonic acid groups as substituents of dicyclopentadiene bis(methylamine) or a salt thereof.

0166797

4. The process of Claim 1 wherein the compound employed contains two methylenephosphonic acid groups as substituents of dicyclopentadiene bis(methylamine) or a salt thereof.

5. The process of Claim 1 wherein the temperature of the cement slurry is at least 82°C.

6. The process of Claim 1 wherein the cement slurry is injected into an oil well.

7. A method of processing a well by injecting a cement slurry into the well,

CHARACTERIZED IN THAT the cement slurry is the slurry produced by the process of Claim 1.

8. A well produced by the method of Claim 7.

9. Aqueous cement slurry characterized in that it comprises a retarding agent as defined in anyone of claims 1 to 4.

European Patent Office

# EUROPEAN SEARCH REPORT

0166797

Application number

EP 84 10 7683

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | FR-A-2 103 355 (HENKEL & CIE. GMBH)<br>* Whole document *<br>--- | 1 | C 04 B 24/00 |
| A | US-A-3 346 488 (J.W. LYONS et al.)<br>* Whole document *<br>--- | 1,6-9 | |
| A | CHEMICAL ABSTRACTS, vol. 97, no. 4, 26th July 1982, Columbus, Ohio, USA; page 143, column 1, abstract no. 261785 s & SU-A-907221 (P.D. ALEKSEEV et al.) 23-02-1982<br>--- | 1,6-9 | |
| A | US-A-3 941 772 (W. PLOGER et al.)<br>* Claim 1 *<br>--- | 1 | TECHNICAL FIELDS SEARCHED (Int. Cl 4) |
| A | FR-A-2 411 810 (MANUFACTURE DE PRODUITS CHIMIQUES PROTEX)<br>* Claim 1 *<br>----- | 1 | C 04 B 24/00 |

The present search report has been drawn up for all claims

| Place of search | Date of completion of the search | Examiner |
|---|---|---|
| BERLIN | 14-02-1985 | STROUD J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document